(19) Europäisches Patentamt
European Patent Office
Office européen des brevets

(11) **EP 2 066 972 B1**

(12) **EUROPÄISCHE PATENTSCHRIFT**

(45) Veröffentlichungstag und Bekanntmachung des Hinweises auf die Patenterteilung:
**03.04.2013   Patentblatt 2013/14**

(21) Anmeldenummer: **07818390.2**

(22) Anmeldetag: **25.09.2007**

(51) Int Cl.:
*F23B 10/00* (2011.01)      *F23B 60/00* (2006.01)
*F23G 5/16* (2006.01)      *F23N 3/00* (2006.01)
*F23N 5/00* (2006.01)      *F23N 5/02* (2006.01)

(86) Internationale Anmeldenummer:
**PCT/EP2007/008305**

(87) Internationale Veröffentlichungsnummer:
**WO 2008/037413 (03.04.2008 Gazette 2008/14)**

(54) **VERFAHREN UND VORRICHTUNG ZUR VERBRENNUNG VON BRENNSTOFFEN**

METHOD AND DEVICE FOR BURNING FUELS

PROCÉDÉ ET DISPOSITIF DESTINÉS À BRÛLER DES COMBUSTIBLES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.09.2006  DE 102006046599**

(43) Veröffentlichungstag der Anmeldung:
**10.06.2009   Patentblatt 2009/24**

(73) Patentinhaber: **Hochschule Karlsruhe Technik und Wirtschaft**
**76133 Karlsruhe (DE)**

(72) Erfinder:
• **KOHLER, Heinz**
**77815 Bühl-Neusatz (DE)**
• **POTRECK, Andreas**
**70806 Kornwestheim (DE)**
• **TRAUTMANN, Thomas**
**67098 Bad Dürkheim (DE)**

(74) Vertreter: **Ege, Guido**
**Panoramastraße 27**
**77815 Bühl (DE)**

(56) Entgegenhaltungen:
**EP-A- 0 409 790      EP-A- 1 698 827**
**AT-B- 412 903      DE-A1- 4 137 778**
**US-A- 4 319 556      US-A- 4 330 260**

**Beschreibung**

Die Erfindung betrifft ein Verfahren und eine Vorrichtung zur Verbrennung fester, organischer Brennstoffe in einem Ofen mit einer Zone zur Vorverbrennung des Brennstoffs mit einer primären, regelbaren Luftzufuhr und einer zweiten, mit der ersten Zone in Verbindung stehenden Zone zur Nachverbrennung von bei der Vorverbrennung entstehenden nachverbrennbaren Reaktionsprodukten mit einer sekundären, regelbaren Luftzufuhr und einer Erfassungseinrichtung zumindest zur Erfassung der Gehalte an Sauerstoff, eines repräsentativen Gehalts an nachverbrennbaren Reaktionsprodukten sowie zur Erfassung einer Temperatur.

Ein ähnliches Verfahren ist beispielsweise aus der AT 412 903 B bekannt, in dem die Verbrennung von kontinuierlich zugeführten organischen Materialien beschrieben wird. Um diese Verbrennungsvorgänge umweltgerecht betreiben zu können, wird eine Regelung der Zuluft zur Verminderung des Schadstoffausstoßes in Abhängigkeit vom Kohlenmonoxidgehalt vorgeschlagen. Bei erhöhter Zuluft erfolgt dabei eine Nachverbrennung von Kohlenmonoxid in der Gasphase in Anwesenheit von ausreichend Restsauerstoff zu Kohlendioxid. Daher muss infolge der stöchiometrischen Verhältnisse der Nachverbrennung ein ausreichender Sauerstoffgehalt vorliegen. Die Bestimmung des Sauerstoffgehalts wird dabei als schwierig erachtet und infolge mangelnder Zuverlässigkeit der Sensorik abgelehnt. Hilfsweise wird auf einen Minimalwert an Kohlenmonoxid (CO) unter Berücksichtigung der Temperaturentwicklung der Verbrennung geregelt. Hierbei wird die Erkenntnis zugrunde gelegt, dass für abnehmende Verbrennungstemperaturen die Kinetik der Umsetzung von Kohlenmonoxid und Sauerstoff zu Kohlendioxid gehemmt ist und erhöhte Kohlenmonoxidgehalte entstehen. Daher ist eine Temperaturerhöhung anzustreben, was beispielsweise durch Drosseln der Luftzufuhr, die den Brennraum abkühlt, erfolgen kann. In der vorgeschlagenen Vorrichtung mit kontinuierlicher Brennstoffzufuhr - und nur bei derartigen Vorrichtungen und nicht bei Vorrichtungen wie beispielsweise Kachelöfen mit diskontinuierlicher Beschickung - kann eine Temperaturerhöhung durch Brennstoffzufuhr erfolgen.

Hierzu gegenläufig ist ein ausreichender Sauerstoffgehalt zu gewährleisten, um eine vollständige stöchiometrische Umsetzung des Kohlenmonoxids zu erzielen. Bei höheren Temperaturen und hohem Sauerstoffeintrag aus kühler Luft wird die im Ofen herrschende Temperatur in der Gasphase gemindert, woraus wiederum eine verringerte Umsetzung von Kohlemonoxid trotz höherem Sauerstoffgehalt resultiert. Wird dieses Verhalten abhängig von der Verbrennungstemperatur zusammengefasst, ergibt sich ein Kohlenmonoxidgehalt mit einem Minimum bei einer charakteristischen Verbrennungstemperatur, das über eine Trendregelung der Luftzufuhr, vorzugsweise mittels Fuzzy-Logik, wie folgt angenähert werden soll:

- bei zunehmender Luftzufuhr und zunehmendem CO-Gehalt wird die Luftzufuhr auf abnehmend geschaltet;
- bei zunehmender Luftzufuhr und abnehmendem CO-Gehalt wird die Luftzufuhr erhöht;
- bei abnehmender Luftzufuhr und zunehmendem CO-Gehalt wird die Luftzufuhr gesteigert;
- bei abnehmender Luftzufuhr und abnehmendem CO-Gehalt bleibt die Luftzufuhr auf abnehmend eingestellt.

Die DE 41 37 778 A1 zeigt ein Verfahren zum Betreiben einer Verbrennungsvorrichtung und eine entsprechende Verbrennungsvorrichtung, bei dem zur Verminderung des Schadstoffaustoßes der Durchsatz direkt in eine Nachverbrennungskammer abhängig von der Temperatur und/oder dem Sauerstoffgehalts des nachverbrannten Heißgases geregelt wird. Zusätzlich kann für die Zufuhr der Gesamtluft eine Regelklappe und für die Aufteilung der Gesamtluft in eine Brenngutkammer und die Nachverbrennungskammer eine Regelverteilerkammer vorgesehen sein.

Aufgabe der Erfindung ist, ein Verfahren und eine Vorrichtung mit einer Regelung vorzuschlagen, bei der eine Verringerung der Schadstoffbelastung erzielt und/oder die stöchiometrischen und kinetischen Verhältnisse der Verbrennung verbessert werden.

Diese Aufgabe wird durch ein diskontinuierliches Verfahren und eine korrespondierende Vorrichtung zur Verbrennung fester, organischer Brennstoffe in einem Ofen mit einer ersten Zone zur Vorverbrennung des Brennstoffs mit einer primären, regelbaren Luftzufuhr und einer zweiten, mit der ersten Zone in Verbindung stehenden Zone zur Nachverbrennung von bei der Vorverbrennung entstehenden nachverbrennbaren Reaktionsprodukten mit einer sekundären, regelbaren Luftzufuhr und einer Erfassungseinrichtung zumindest zur Erfassung der Gehalte an Sauerstoff, eines repräsentativen Gehalts an nachverbrennbaren Reaktionsprodukten sowie zur Erfassung einer Temperatur, wobei die primäre Luftzufuhr mittels einer zumindest aus einem Parameter gebildeten ersten Stellgröße und die sekundäre Luftzufuhr mittels einer aus zumindest zwei Parametern gebildeten zweiten Stellgröße geregelt wird, gelöst, wobei der zumindest eine Parameter zur Bildung der ersten Stellgröße während einer ersten vorgebbaren Brennphase bis zu einer vorgebbaren Zeit, einer vorgebbaren Temperatur und/oder einem vorgebbaren Temperaturgradienten die Temperatur ist und nach der ersten vorgebbaren Brennphase die zumindest zwei Parameter zur Bildung der ersten Stellgröße der Gehalt an Sauerstoff und die Temperatur und die zumindest zwei Parameter zur Bildung der zweiten Stellgröße der repräsentative Gehalt an nachverbrennbaren Reaktionsprodukten und die Temperatur sind.

Dabei sind unter festen, organischen Brennstoffen alle nachwachsenden, fossilen und aus einem Recyclingprozess hervorgehenden Energieträger zu verstehen, die in einem Verbrennungsprozess insbesondere Wärmeenergie liefern, beispielsweise Holz in allen Erscheinungsformen wie Stückholz, Pellets und dergleichen, andere nachwachsende Energieträger wie zum Beispiel Getreide, fossile Brennstoffe wie Kohle oder feste Erdölprodukte, Biomasse und/oder organische Abfälle wie Häckselware, Holzschnitzel, organische Abfälle aus der Land- und Viehwirtschaft. Besonders vorteilhaft ist das Verfahren für feste Brennstoffe, bei denen eine Verbrennung an deren Oberfläche durch optimierte Einstellung der Reaktionsparameter gezielt gemäß des erfinderischen Gedankens optimiert werden kann.

Es versteht sich, dass die Anwendung des Verfahrens nicht durch die Art der Brennstoffe eingeschränkt wird. Vielmehr können Brennstoffe unterschiedlicher Art auch gemischt in den Ofen beziehungsweise eine andere vorteilhafte Vorrichtung für den Verbrennungsprozess eingebracht werden. Die Zuführung von Brennstoff kann diskontinuierlich in einem sogenannten Batch-Verfahren erfolgen.

Bei für die Anwendung der Erfindung vorgesehenen Heizeinrichtungen kann es sich beispielsweise um Einrichtungen zur diskontinuierlichen Befeuerungen wie Kachelöfen, die mit Stückholz beschickt werden, handeln.

Zur Anwendung der Erfindung besonders geeignet sind Vorrichtungen wie Öfen, beispielsweise Kachelöfen, Heizkessel und dergleichen, die mit einer diskontinuierlichen Zuführung von Brennstoff versorgt werden und die über die Dauer eines optimierten Abbrandes einen unterschiedlichen Bedarf an Sauerstoffzufuhr haben und damit einer besonders ausgestalteten Regelung bedürfen.

Durch die Verwendung eines Sauerstoffsensors ist der Gehalt von Restsauerstoff während des Betriebs als hilfreiche Messgröße und/oder Regelgröße zugänglich. Überraschenderweise hat sich gezeigt, dass die Messung des Sauerstoffgehalts besonders vorteilhaft für die Regelung der Luftzufuhr in die primäre Kammer herangezogen werden kann. Da die Sauerstoffkonzentration in Verbindung mit der Verbrennungstemperatur eine optimale Reaktionskinetik an der Brennstoffoberfläche ermöglicht, ist eine Reaktionsführung bei optimiertem Sauerstoffgehalt und optimierter Temperatur bei vorgebbarer Temperatur in Verbindung mit einer in diesem Temperaturbereich optimierten Sauerstoffzufuhr möglich. Dies kann insbesondere bei diskontinuierlich befeuerten Öfen die Entstehung einer über die Zeit ungleichmäßigen Entwicklung der Verbrennungstemperatur und damit ungleichmäßig zur Verfügung stehender Heizenergie vermindern, wodurch je nach Anwendungszweck Brennstoffeffizienz, Heizkomfort und Schadstoffbelastung verbessert werden können. Weiterhin kann einer Verarmung an Sauerstoff bei hohen Temperaturen mit damit verbundener unvollständiger Verbrennung des Brennstoffs begegnet werden.

Wird die sekundäre Zone abhängig von der Temperatur und vom Gehalt der nachverbrennbaren Stoffe geregelt, kann die Nachverbrennung optimiert werden und es können zu hohe Temperaturen vermieden werden, wodurch eine mit zunehmender Temperatur in steigender Konzentration erfolgende Bildung so genannter Stickoxide aus in Luft vorhandenem Stickstoff und Sauerstoff wie zum Beispiel Stickstoffmonoxid und/oder Stickstoffdioxid, die bezüglich ihres die Umwelt gefährdeten Potentials bei ähnlicher Konzentration zumindest so relevant sind wie Kohlenmonoxid, vermindert werden kann.

Besonders vorteilhaft kann sein, wenn die beiden Zonen voneinander beispielsweise durch eine Trennwand teilweise voneinander getrennt sind und nur durch eine entsprechend in ihren Dimensionen abgestimmte Öffnung miteinander verbunden sind, so dass ein Abgasstrom zwischen dabei gebildeten primären und sekundären Kammern entsteht, der eine Rückführung von entstandenem Kohlendioxid in die primäre Kammer der primären Verbrennung des Brennstoffes zumindest vermindert, so dass dieses Kohlendioxid nicht wieder am heißen Brenngut zu Kohlenmonoxid reduziert wird. Weiterhin kann im Bereich dieser Öffnung besonders gut die Zuführung von Luft in die zweite Zone beziehungsweise Kammer zur Nachverbrennung erfolgen, da ein inniger Austausch von Abgas und Zuluft erzielt werden kann. Weiterhin kann eine entsprechende Luftzufuhr und damit ein entsprechender Sauerstoffpartialdruck bei möglichst geringer durch Luftzufuhr bedingter Temperaturerniedrigung - ausreichende Temperatur und Sauerstoffpartialdruck sind für die Reaktionskinetik von Kohlenmonoxid zu Kohlendioxid ausschlaggebend - direkt beeinflusst werden.

Hinzukommend kann besonders vorteilhaft sein, wenn die zweite Zone durch Einführung einer Trennwand und Bildung einer Kammer so erfolgt, dass der von den Verbrennungsgasen zurückzulegende Weg verlängert wird. Eine längere Verweildauer kann in vorteilhafter Weise einerseits einen intensiveren Wärmeaustausch und andererseits eine verbesserte Reaktionsdauer zur Umsetzung von umweltschädlichen zu weniger problematischen Abgasen zur Folge haben. Dabei ist es besonders vorteilhaft, entsprechend der in den beiden Zonen oder Kammern vorhandenen Reaktionsbedingungen die Luftzufuhr separat zu regeln. Es hat sich als vorteilhaft erwiesen, in der ersten Zone, in der der Brennstoff vorgehalten wird, den Vorverbrennungsprozess derart zu regeln, dass optimierte Bedingungen mit einer entsprechenden Temperatur und einem entsprechend optimierten Sauerstoffgehalt erzielt werden können, beispielsweise indem die Regelung der Primärluft in Abhängigkeit von der Temperatur und dem Partialdruck von Sauerstoff erfolgt, und in der zweiten Zone optimierte Bedingungen für eine Nachverbrennung der schadstoffbelasteten Abgase der Vorverbrennung durch entsprechende Luftzufuhr einzustellen.

Die Luftzufuhr erfolgt dabei regelbar, beispielsweise mittels an der erfindungsgemäßen Vorrichtung vorgesehener Klappen, Schieber, Ventile oder dergleichen, die von einer von der Steuerung mit Stellgrößen beaufschlagten Stellgliedern wie Servomotoren, gepulsten Elektromagneten und dergleichen betätigt werden. Die Luft wird im Regelfall bei entsprechender Öffnung der Luftzufuhr entweder von einem kaminseitig angebrachte, sogenannten Saugzugventilator in den Brennraum gesaugt oder direkt in den Brennraum eingeblasen. In speziellen Ausgestaltungsbeispielen kann die Luft auch unter Vordruck eingeblasen oder als Pressluft dosiert werden. In sehr speziellen Fällen, beispielsweise bei organischen Brennstoffen mit sehr hohem Anteil an gebundenem Stickstoff und/oder erhöhter Wahrscheinlichkeit einer Stickoxidbildung, beispielsweise bei hohen Verbrennungstemperaturen, kann es angezeigt sein, den Sauerstoffanteil in der Luftzufuhr bis hin zur Zufuhr reinen Sauerstoffs zu erhöhen.

Die Erfassungseinrichtung zur Erfassung der gewünschten Messgrößen kann beispielsweise einer einfachen Montage wegen am Ofen oder einem zugehörigen Abgasrohrstutzen als eine Einheit ausgestaltet sein. Hierzu können alle Messeinrichtungen wie Sensoren, Messzellen oder Signalgeber an einem Ort platziert werden und mittels einer einzigen Verkabelung mit der Ofensteuerung verbunden werden. Die räumliche Anordnung einer derartigen Einheit richtet sich vorteilhafterweise nach dem Ort, an dem die zu messenden Signale für den gesamten Ofen repräsentativ sind. Es kann sich hierbei um einen Ort handeln, der direkt von den Abgasen umströmt wird, beispielsweise im Abgasraum vor dem Abzug in den Kamin. Vorteilhaft kann auch eine sogenannte Bypass-Lösung sein, für die der Abgasstrom verzweigt und nur ein Teil des Abgases an der Messeinrichtung zur Erfassung der gewünschten Parameter vorbeiströmt. In speziellen Ausgestaltungsbeispielen kann es auch erforderlich sein, Messeinrichtungen genauer an den Ort, an dem eine entsprechende Umsetzung stattfindet, zu platzieren. Beispielsweise kann ein Sauerstoffsensor und/oder ein Temperatursensor auch in der ersten Zone beziehungsweise Kammer platziert werden, um den Verbrennungsprozess mit höherer Genauigkeit überwachen zu können. Weiterhin kann der oder ein zusätzlicher Sauerstoffsensor in der zweiten Zone beziehungsweise Kammer vorgesehen sein, der oder ein zusätzlicher Temperaturfühler kann in der zweiten Zone beziehungsweise Kammer und/oder der Sensor zur Erfassung von nachverbrennbaren Gasen kann in der zweiten Zone beziehungsweise Kammer oder in einer Strecke der Weiterführung des Abgasstroms vor dem Kamin platziert sein. Ein weiterer Sensor zur Messung und/oder Regelung eines optimierten Verbrennungsprozesses kann beispielsweise ein insbesondere in der ersten Zone beziehungsweise Kammer platzierter Feuchtesensor sein. Es versteht sich, dass weitere Sensoren oder Sensorarrays und Fühler in größerer Anzahl und weiteren geeigneten Orten, beispielsweise im Ofen oder Kamin - soweit durch die Mess- und Regelaufgabe angezeigt - von der Erfindung umfasst sind, im Sinne einer kostengünstigen und/oder messtechnisch einfach zu haltenden Lösung die Anzahl der Sensoren jedoch minimal gehalten wird.

Es hat sich gezeigt, dass ein besonders vorteilhaftes Ausgestaltungsbeispiel einer Erfassungseinrichtung einen Sensor zur Erfassung des Gehalts an Sauerstoff, einen Sensor zur Erfassung des Gehalts an nachverbrennbaren Gasen und zumindest einen Temperaturfühler umfasst, wobei die Sensoren zwischen zweiter Zone beziehungsweise Kammer und Kamin und die Temperaturfühler räumlich so angeordnet sind, dass sie die Verbrennungstemperatur, die Abgastemperatur im Kamin und/oder die Temperatur im Wasser des Wärmetauschers repräsentativ wiedergeben. Als besonders vorteilhaft hat es sich herausgestellt, wenn der zur Bestimmung der Reaktionstemperaturen vorgesehene Temperaturfühler am Übergang zwischen beiden Zonen beziehungsweise Kammern angeordnet ist. Man kann in der Regel davon ausgehen, dass eine - im Übrigen in der Folge von an unterschiedlichen Orten der Brennzone beziehungsweise -kammer sehr heterogen ablaufende Verbrennungsreaktionen - sehr heterogene Verteilung der Verbrennungstemperatur im Brennraum vorhanden und deren genaue Bestimmung nicht exakt möglich ist, so dass es von Vorteil ist stattdessen die im Übergangsbereich ermittelte Temperatur als Verbrennungstemperatur zu verwenden.

Erfindungemäß erfolgt die Regelung des Verbrennungsvorgangs zumindest mit einer Auswahl dieser Sensoren und Fühler beziehungsweise der durch diese erfassten Gehalte und Temperaturen. Als besonders vorteilhaft hat sich erwiesen, die Zufuhr von Luft in die beiden Zonen beziehungsweise Kammern unabhängig voneinander zu regeln. Dabei erfolgt die Regelung der Luftzufuhr in die erste Zone beziehungsweise Kammer zumindest mittels der Verbrennungstemperatur. Insbesondere beim Anfahren eines Abbrandes in diskontinuierlichen Vorrichtungen ist es vorteilhaft, wenn der zumindest eine Parameter zur Bildung einer ersten Stellgröße zur Steuerung beziehungsweise Regelung während einer ersten Brennphase bis zu einer vorgebbaren Zeit, einer vorgebbaren Temperatur und/oder einem vorgebbaren Temperaturgradienten die Temperatur ist.

In der Anfahrphase einer Verbrennung steht gewöhnlicherweise genügend Sauerstoff zur Verfügung und das Brenngut - beispielsweise in der ersten Zone beziehungsweise Kammer aufgestapeltes Stückholz - soll möglichst rasch entfacht werden. Die Verbrennung wird in dieser ersten Brennphase erfahrungsgemäß durch eine zu niedrige Reaktionskinetik durch die noch fehlenden idealen Temperaturbedingungen und nicht durch zu geringen Sauerstoffgehalt gehemmt. Es wird daher eine Stellgröße für die Luftzufuhr in die erste Zone beziehungsweise Kammer gebildet, die lediglich von der Temperatur in der ersten Zone beziehungsweise Kammer oder einer hierfür repräsentativen Größe, beispielsweise eines anderweitig positionierten Temperaturfühlers unter Berücksichtigung von Korrekturgrößen, die den räumlichen Abstand kompensieren, und gegebenenfalls von weiteren gezielt vorgebbaren Korrektur- oder Parametrisierungsfaktoren abhängig ist. In erster Linie erfolgt die Luftzufuhr in Abhängigkeit von der sich einstellenden Temperatur. Beispielsweise kann das Abhängigkeitsverhältnis zwischen Temperatur und primärer Luftzufuhr linear sein oder mittels eines anderen metrischen algebraischen Zusammenhangs eingestellt werden. Unter metrisch algebraischem Zusammenhang ist hier die Korrelation einer von der Erfassungseinrichtung erfassten Messgröße mit einem aus dieser Messgröße gebildeten, diskreten und eindeutig zuordenbaren Stellgrößen zu verstehen, wobei die Korrelierung mittels einer mathematischen Formel oder durch Auslesen von hinterlegten, korrelierten Tabellenwerten erfolgen kann.

Zusätzlich oder alternativ kann in Abhängigkeit von einer vorgebbaren Zeit, beispielsweise bis zu einem typischen, beispielsweise empirisch ermittelten Zeitpunkt, an dem sich eine Verbrennung soweit entwickelt hat, dass der vorhandene Sauerstoff soweit reduziert wird, dass eine hohe Frischluftzufuhr nötig wird, abhängig gemacht werden, bei dem diese erste Brennphase auf alle Fälle beendet wird. Zusätzlich oder alternativ kann die erste Brennphase durch Vorgabe einer Grenztemperatur, oberhalb der eine ausreichende Umsetzung von Brennstoff bei für eine Regelung ausreichender Kinetik erfolgt, begrenzt werden. Weiterhin kann die erste Brennphase durch Überschreitung eines Temperaturgradienten beendet werden, beispielsweise wenn eine Temperaturänderung wie Temperaturanstieg einen vorgegebenen Wert überschreitet.

Nach dem erfinderischen Gedanken werden nach Abschluss der ersten Brennphase zumindest zwei Parameter, vorzugsweise die bereits oben erwähnte Temperatur und zusätzlich der Gehalt an Sauerstoff zur Bildung der ersten Stellgröße für die Regelung beziehungsweise Steuerung der primären Luftzufuhr herangezogen. Die Sollgröße resultiert vorteilhafterweise aus den Messwerten der Sauerstoffmesswerte und der Temperaturmesswerte, die metrisch algebraisch gebildet und metrisch algebraisch miteinander verknüpft sein können. Vorzugsweise erfolgt eine Normierung der Messwerte auf eine Stellgröße mit maximal möglicher Luftzufuhr. In der Praxis hat sich für eine typische Vorrichtung eine Regelung über folgenden Zusammenhang bewährt:

$$SG_{pri} = A + f(M_T) \otimes f(M_{Ox}) \qquad\qquad (1)$$

mit $SG_{pri}$ als Stellgröße für die primäre Luftzufuhr, beispielsweise einem Öffnungswinkel oder Öffnungsgrad einer Luftzufuhrklappe, A als Offsetposition für die Luftzufuhr, $f(M_T)$ bezeichnet eine von der Messgröße $M_T$ für die Temperatur abhängige Funktion und $f(M_{Ox})$ eine von der Messgröße $M_{ox}$ für den Gehalt an Sauerstoff abhängige Funktion. Der Operator $\otimes$ bezeichnet jegliche Form einer algebraischen Verknüpfung. Es versteht sich, dass die verwendeten Messgrößen zur Erzielung spezieller Regelungseffekte in ihrem ursprünglichen Signal-/Gehaltverhalten beziehungsweise Signal-/Temperaturverhalten vorzugsweise linearisiert verwendet werden können. Dabei kann das metrisch algebraische Verhalten der beiden Funktion sowie deren Verknüpfung je nach Anforderung an die Regelung algebraischer Natur sein, beispielsweise additiv, multiplikativ, logarithmisch, exponentiell, polynom oder aus diesen kombiniert sein.

In ähnlicher Weise erfolgt die Regelung der Luftzufuhr in die zweite Zone beziehungsweise Kammer, in der die Nachverbrennung von nachverbrennbaren Bestandteilen erfolgt. Zumindest zwei Parameter zur Regelung der sekundären Luftzufuhr in Form einer zweiten Stellgröße werden verwendet. Nach dem erfinderischen Gedanken sind dies vorzugsweise der repräsentative Gehalt an nachverbrennbaren Reaktionsprodukten und die Temperatur. In zur Regelung der primären Luftzufuhr analoger Weise hat es sich als vorteilhaft erwiesen, dass auch für die Regelung der Luftzufuhr zur zweiten Zone beziehungsweise Kammer mehrere Parameter zumindest jedoch die beiden genannten unabhängig voneinander in Form einer entsprechenden Anzahl von Termen zu dieser Stellgröße algebraisch verknüpft werden können. Eine Mehrzahl von Komponenten einer Stellgröße kann gegeneinander gewichtet und auf eine maximale Luftzufuhr normiert werden. Für die Regelung der sekundären Luftzufuhr ergibt sich gleichfalls ein Ausgestaltungsbeispiel mit einem bevorzugtem Regelzusammenhang der algebraisch der Gleichung (1) entspricht und die dort beschriebenen vorteilhaften Ausgestaltungsbeispiele beinhaltet:

$$SG_{sek} = B + f(M_{CO}) \otimes f(M_T) \qquad\qquad (2)$$

mit $SG_{sek}$ als Stellgröße für die sekundäre Luftzufuhr und B einem Offset für die Luftzufuhr wie oben analog beschrieben. Die Funktion $f(M_T)$ der Messgröße $M_T$ für die Temperatur wie oben beschrieben und $f(M_{co})$ für die Messgröße $M_{CO}$ für den Gehalt an nachverbrennbaren Gasen, die beispielsweise den Gehalt an Kohlenmonoxid als Führungsgröße beziehungsweise als Summensignal für den Gehalt an nachverbrennbaren Verbindungen angibt sind entsprechend der Gleichung (1) zu verwenden, wobei der Verknüpfungsoperator $\otimes$ sowie die Funktionsumfang der Gleichung (2) in derselben Weise variieren kann wie in Gleichung (1). Letzten Endes ist die explizite Form der mathematischen Zusammenhänge der Gleichungen (1) und (2) funktional abhängig von der verwendeten Sensorik und der Art der verwendeten Heizeinrichtung, so dass für jede dieser Komponenten im Zusammenspiel als Einheit ein entsprechender mathematischer Zusammenhang zu definieren ist.

Ein vorteilhaftes Ausgestaltungsbeispiel verbindet ein Verfahren, bei dem einerseits ein Temperatursignal und ein Signal zur Bestimmung des Gehalts an Sauerstoff der Erfassungseinrichtung Eingangsgrößen einer algebraisch-metrischen Funktion darstellen, nach der der Primärluftstrom durch Positionieren einer Stellklappe über die Dauer eines Abbrennvorgangs definiert wird und bei dem andererseits ein Temperatursignal und ein Signal zur Bestimmung des repräsentativen Gehaltes der nachverbrennbaren Reaktionsprodukte der Erfassungseinrichtung Eingangsgrößen einer algebraisch-metrischen Funktion darstellen, nach der der Sekundärluftstrom durch Positionieren einer Stellklappe über die Dauer eines Abbrennvorgangs definiert wird. Diese algebraischen Funktionen können in verschiedenen Abbrandphasen unterschiedlich ausgestaltet sein.

Nach einem vorteilhaften Ausgestaltungsbeispiel erfolgt die Regelung zumindest einer der beiden Stellgrößen getaktet nach einer vorgebbaren Regelungsrate. Dies bedeutet, dass die Anpassung der Luftzufuhr an geänderte Messwerte nicht kontinuierlich sondern in vorgebbaren Zeitabständen erfolgt. Dadurch kann beispielsweise ein Messwert durch einen oder mehrere weitere Messwerte validiert werden oder mehrere Messwerte können gemittelt und die Luftzufuhr kann einem sich ändernden Messwert mittels einer gleitenden Nachführung angepasst werden. Generell betrachtet können aus der Mess- und Regeltechnik bekannte Verfahren auf die Regelung der Luftzufuhr in zumindest eine der beiden Zonen beziehungsweise Kammern in Abhängigkeit von den gemessenen und gegebenenfalls gefilterten Messwertsignalen zur Erzielung einer schnell ansprechenden aber von Überschwingem weitgehend freien Regelung herangezogen werden. Insbesondere kann bei schnellen Änderungen der Messwerte die zugehörige Stellgröße für die Luftzufuhr derart geändert werden, dass eine Begrenzung der Stellgrößenänderung vorgebbar ist. Es hat sich als vorteilhaft erwiesen, die Luftzufuhr schrittweise zu ändern und bei schnellen Anstiegen beispielsweise des Gehalts an nachverbrennbaren Gasen, die Luftzufuhr nur um eine begrenzte Anzahl von Schritten zu erhöhen, beispielsweise um einen Schritt. Weiterhin hat es sich als vorteilhaft gezeigt, wenn die Luftzufuhr bei vorgegebenen Betriebsarten, beispielsweise im Anfahrprozess oder bei maximaler Verbrennungstemperatur auf einen Minimal- oder Maximalwert eingestellt wird.

Bei der erfindungsgemäßen Regelung kann weiterhin von Vorteil sein, wenn die Regelungsrate kleiner als eine Messrate zur Erfassung der Parameter der Erfassungseinrichtung ist und beispielsweise mittels einer höheren Messrate zwischen den Regelraten eine Dämpfung der Signale erfolgt und ein bedämpftes Messwertsignal in die Regelung mittels der beschriebenen Sollgrößen erfolgt. Es hat sich gezeigt, dass ein Regelzyklus alle 30-120 sec. ausreichend sein kann und gute Regelungseigenschaften aufweist.

Nach einem weiteren erfinderischen Gedanken umfasst die Erfassungseinrichtung eine Mehrzahl von Sensoren, deren Signale zur Regelung der erfinderischen Vorrichtung herangezogen werden. Allen Formen der Regelung werden Messwerte eines Temperaturfühlers zugrunde gelegt. Als Temperaturfühler können beispielsweise Thermoelemente sowie Heiß- und Kaltleiter eingesetzt werden.

Zur Bestimmung des Gehalts an nachverbrennbaren Reaktionsprodukten können prinzipiell alle Nachweismethoden herangezogen werden, die eine Empfindlichkeit gegenüber nachverbrennbaren Gasen im vorliegenden Konzentrationsbereich bis zu 20000 ppm mit ausreichender Auflösung aufweisen. Dabei sollen derartige Messmethoden einfach und weitgehend ohne Wartung arbeiten, so dass optische Methoden von vorneherein weniger vorteilhaft sind. Es können Halbleitergassensoren auf Zinndioxid- oder Galliumoxidbasis eingesetzt werden, die allerdings wegen ihrer Querempfindlichkeit gegenüber Sauerstoff und Wasserdampf weniger geeignet sind oder mittels eines Wasserdampfsensors aufwändig wasserdampfkompensiert werden müssen. Pellistoren können wegen ihrer geringeren Empfindlichkeit ebenfalls weniger geeignet sein. Gemäß eines erfinderischen Gedankens ist ein sogenannter Mischpotentialsensor vorzuziehen, da die vorgenannten Nachteile der übrigen Sensoren weit weniger ausgebildet sind. Die Sensoren weisen zwei auf einem Festelektrolyt aufgebrachte, für oxidierbare, in vorliegendem Falle als nachverbrennbar bezeichneten Gase und den Restsauerstoff unterschiedlich katalytisch aktive Elektroden auf, so dass bei Messung der Spannung der so gebildeten Messzelle ein Mischpotential aufgrund der sich durch Adsorption von Sauerstoff an der einen, sogenannten Anode und Adsorption von nachverbrennbaren Gasen an der anderen Elektrode, der sogenannten Kathode auftritt, wobei die einzelnen Potentiale selbst wiederum Funktionen der einzelnen Gehalte von Sauerstoff und nachverbrennbarer Gase sind, so dass zur sauerstoffunabhängigen Ermittlung des Gehalts an nachverbrennbaren Gasen der Gehalt an Sauerstoff kompensiert werden muss. Dies erfolgt erfindungsgemäß durch den weiter unten beschriebenen Sauerstoffsensor.

Weiterhin ist das entstehende Potential an der Kathode abhängig von den in verschiedenen Gehalten vorliegenden Spezies nachverbrennbarer Gase, für die das katalytische Material wiederum unterschiedliche Selektivitäten aufweisen kann, wodurch die einzelnen Spezies selbst bei jeweils gleichem Gehalt unterschiedlich zu dem entstehenden Potential beitragen. Ausgehend von einer empirisch ermittelten Verteilung der nachverbrennbaren Gasspezies hat sich gezeigt, dass ein auf diese Weise ermitteltes Mischpotential eine ausreichende eine repräsentative Größe für den Gehalt einer Summe von oxidierbaren, das heißt, nachverbrennbaren Gasen wie zum Beispiel Kohlenmonoxid als Hauptkomponente, Wasserstoff und teiloxidierten Kohlenwasserstoffen darstellt und diesbezüglich dem Halbleitersensor überlegen ist.

Die Bestimmung des Gehalts an Sauerstoff erfordert ebenfalls eine einfache Messung ohne hohen Wartungsaufwand. Aus dem Stand der Technik ist dabei die potentiometrisch arbeitende Lambda-Sonde bekannt und infolge ihrer schlechten Auflösung im Messbereich der für die vorliegende Anwendung typischen Sauerstoffgehalte und der Beeinflussung durch variierende Restgaskonzentrationen abgelehnt worden.

Ein wesentlicher erfinderischer Beitrag zur vorliegenden Erfindung liegt daher in der Auswahl einer bis dato für diese Anwendung nicht bekannten, sogenannten dynamischen Sauerstoffzelle. Das Funktionsprinzip einer potentiometrischen Sonde mit geheiztem Festelektrolyt aus Zirkoniumoxid und aufgebrachten Elektroden aus Platin entspringt der Lambda-sonde, wobei der in einer vorgegebenen Konzentration in der Gasphase vorliegende Sauerstoff an den Elektroden potentialbildend wirkt. Bei der dynamischen Messzelle bildet das Zirkoniumoxid zwei Außenwände einer abgeschlossenen Kammer, wobei an den Oberflächen der Außen- und Innenwände Platin als Elektrodenmaterial zur Umsetzung von Sauerstoff aufgetragen ist. Bei Anlegen einer Spannung zwischen einem ersten Elektrodenpaar mit einer Außen- und einer Innenelektrode wird in der Kammer der Gehalt an Sauerstoff vermindert, wobei dessen Gehalt das Potential der inneren Elektrode eines zweiten, Elektrodenpaars mit innen und außen angeordneten Elektroden verändert. Der Sauerstoffionentransport durch die Zirkoniumoxidwand wird durch Stromzufuhr solange fortgesetzt bis ein vorgegebenes Potential am zweiten Elektrodenpaar erreicht ist. Danach wird der Sauerstoffionentransport durch Potentialumkehr reversiert und die Strommenge zur Erreichung eines erneuten Potentialgleichgewichts wird als Funktion des außen vorliegenden Gehalts an Sauerstoff ausgewertet. Auf diese Weise kann durch den "Sauerstoffpumpeffekt" des ersten Elektrodenpaars die Auflösung der Messzelle an die in der Anwendung typischerweise vorliegenden Sauerstoffgehalte angepasst werden, so dass stets ein gegenüber der Lambda-Sonde erheblich verbessertes Auflösungsvermögen erzielt und eine zuverlässige Regelung der Luftzufuhr in die primäre Kammer erst ermöglicht wird. Weiterhin dient das Signal der dynamischen Sauerstoffzelle zur Kompensation der Sauerstoffabhängigkeit des Mischpotentialsensors. Alternativ können Bestimmungsmethoden vorteilhaft sein, die sich des amperometrischen Messprinzips oder auf einer Ladungs- oder Wiederstandsmessung bedienen. Messmethoden nach dem potentiometrischen Prinzip in Verbindung mit diesen Messmethoden können entsprechend der nach diesem Prinzip der dynamischen Sauerstoffmesszelle ebenfalls von Vorteil sein, so dass der Begriff dynamische Sauerstoffmesszelle entsprechend auf diese Methoden zu erweitern ist.

Die Erfindung umfasst weiterhin eine Vorrichtung zur Verbrennung organischer Brennstoffe mit einer ersten Zone zur Vorverbrennung des Brennstoffs mit einer primären, regelbaren Luftzufuhr und einer zweiten, mit der ersten Zone in Verbindung stehenden Zone zur Nachverbrennung von bei der Vorverbrennung entstehenden nachverbrennbaren Reaktionsprodukten mit einer sekundären, regelbaren Luftzufuhr und einer Erfassungseinrichtung zumindest zur Erfassung der Gehalte an Sauerstoff, eines repräsentativen Gehalts an nachverbrennbaren Reaktionsprodukten sowie zur Erfassung der Temperatur zur Durchführung des Verfahrens gemäß den zuvor beschriebenen Verfahrensschritten. Hierbei kann eine Steuereinrichtung die nötigen Verfahrenschritte in Form eines dort in einem Speicher hinterlegten und in einem integrierten Rechnerbaustein wie einem Mikroprozessor ausgeführten Programms durchführen. Die einzelnen Messwertaufnehmer sowie Betätigungseinheiten zur Sicherstellung der Luftzufuhr können dabei separat oder mittels eines Kommunikationsnetzes wie Feldbus oder Funkverbindung und dergleichen miteinander in Signalverbindung stehen.

Dabei können wie bereits oben näher erläutert in der erfindungsgemäßen Vorrichtung die Zonen durch Kammern ersetzt werden, die durch eine entsprechende, mit einer Öffnung versehenen Trennwand voneinander getrennt sind.

Es hat sich gezeigt, dass unabhängig vom oder in Verbindung mit dem oben erläuterten Verfahren die Nachverbrennung von nachverbrennbaren Gasen katalytisch beschleunigt werden kann. Hierzu kann es vorteilhaft sein, in der sekundären Zone beziehungsweise Klammer einen Katalysator vorzusehen, der mit einer für die Anwendung optimierten großen Oberfläche versehen ist. Prinzipiell eignen sich in den Strömungsquerschnitt der sekundären Zone beziehungsweise Kammer eingebrachte Materialien, die aus dem Katalysator bestehen, diesen enthalten oder tragen wie beispielsweise Netze, oberflächenaktive Körper und dergleichen, so dass der Kontakt der Gasmoleküle mit dem Katalysator bei optimiertem Strömungswiderstand eine hohe Wahrscheinlichkeit aufweist. Weiterhin hat sich als vorteilhaft herausgestellt, wenn der Katalysator zumindest zeitweise, beispielsweise bei zu erwartendem Anstieg des Gehalts an nachverbrennbaren Gasen, beheizt wird, vorzugsweise auf Temperaturen, ab denen eine katalytische Umsetzung erhöht ist.

Die Erfindung wird anhand der Figuren 1 bis 3 näher erläutert. Dabei zeigen:

Figur 1    eine Vorrichtung zur Durchführung des erfindungsgemäßen Verfahrens,
Figur 2    eine Routine zur Regelung der primären Luftzufuhr und
Figur 3    eine Routine zur Regelung der sekundären Luftzufuhr.

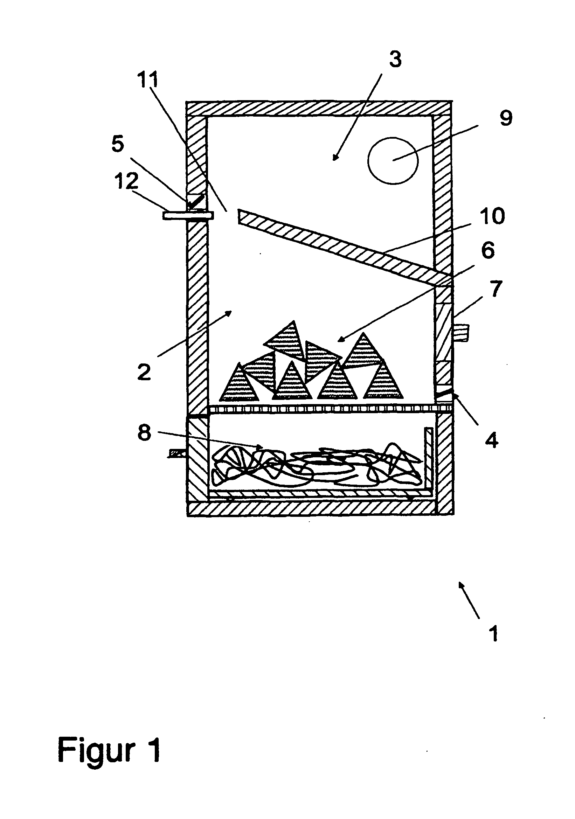

Figur 1 zeigt eine Vorrichtung 1 zur Durchführung des erfinderischen Verfahrens als Ausgestaltungsbeispiel eines diskontinuierlich mit Brennstoff beschickten Ofens. In dem Ofengehäuse ist eine erste Zone 2 vorgesehen, in dem die primäre Verbrennung stattfindet. Räumlich beabstandet schließt sich die zweite Zone 3 an, in der die Nachverbrennung von unvollständig verbrannten Verbrennungsgasen stattfindet. Beide Zonen sind jeweils mittels einer Zuluftregelung 4, 5 versehen, durch die nach dem erfinderischen Verfahren geregelt Luft zugeführt wird.

Bei der diskontinuierlichen Verbrennung wird Brennstoff 6 über eine Einfülltür 7 in der primären Zone aufgestapelt und angezündet. Feste Verbrennungsprodukte 8 gelangen durch einen Rost in den Aschekasten, während gasförmige Produkte wegen des durch die Wärmeentwicklung entstehenden Zuges über die zweite Zone 3 zur Kaminöffnung 9 gelangen.

Zur besseren Trennung der beiden Zonen 2, 3 ist im gezeigten Ausführungsbeispiel eine Trennwand 10 in das Gehäuse integriert, die so ausgestaltet ist, dass sich in Zone 1 sammelnde Gase über eine in der Trennwand 10 ausgesparte Öffnung 11 in die zweite Zone 3 gelangen und dort, soweit notwendig, unter Luftzufuhr nachverbrennen können. Dabei ist die sekundäre Luftzufuhr 5 so ausgestaltet, dass eine gute Durchmischung zwischen aus der primären Zone ausströmendes Gas und die zugeführte Luft gewährleistet ist.

Zur Regelung der Vorrichtung 1 ist weiterhin eine Sensoreinrichtung 12 vorgesehen, die an bevorzugter Stelle den repräsentativen Gehalt an Kohlenmonoxid, Sauerstoff und die Temperatur misst. Im gezeigten Ausführungsbeispiel ist dies der Durchmischungsbereich der sekundären Luftzufuhr 5 und der aus der primären Zone 2 strömenden Gase. Es versteht sich, dass sowohl Sensoreinrichtung 12 als auch die sekundäre Luftzufuhr 5 an anderen Orten in vorteilhafter Weise angeordnet werden können sowie die Zonen 2, 3 entsprechend den Anforderungen an das Brennraumvolumen und die Verweildauer des Gases zur Nachverbrennung ausgestaltet werden können.

Weiterhin kann die zweite Zone einen - nicht dargestellten - gegebenenfalls beheizten Katalysator enthalten, mit dem eine Umsetzung nachverbrennbarer Gase bei niedrigen Temperaturen beziehungsweise größeren Reaktionsgeschwindigkeiten erzielt werden kann.

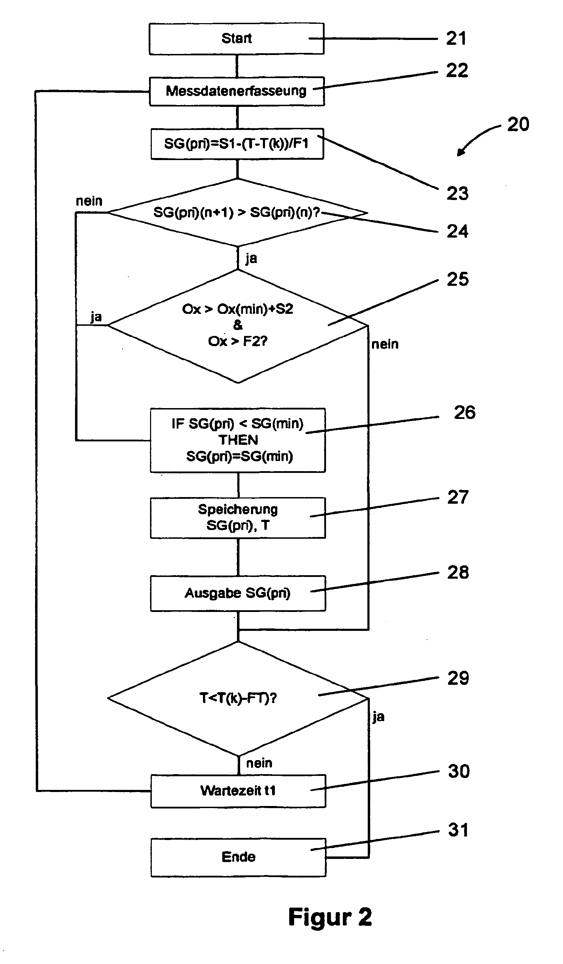

Figur 2 zeigt ein Ausgestaltungsbeispiel einer auf die Vorrichtung 1 der Figur 1 abgestimmten Regelung 20 für die primäre Luftzufuhr 4. Zu Beginn wird die Routine mit einem Block 21 gestartet. In Block 22 werden die erforderlichen Messdaten - hier die Temperatur und der Sauerstoffgehalt - erfasst. Dies bedeutet nicht zwangsläufig, dass in diesem Block unbearbeitet Daten direkt aus Messsignalen der Sensoren gewonnen werden. Vielmehr kann in diesem Block bereits auf überarbeitete Signale, die beispielsweise gemittelt und gewichtet sein können, zurück gegriffen werden.

In Block 23 wird eine Stellgröße SG(pri) für die primäre Luftzufuhr ermittelt. Handelt es sich beispielsweise um einen Drosselklappenregelung, so kann die Stellgröße auf eine prozentuale Öffnung berechnet werden. Ausgehend von einer mittleren Öffnung S1 wird die Öffnung abhängig von der Differenz aus der Brennkammertemperatur T und einer vorzugebenden, bevorzugten Verbrennungstemperatur T(k) zwischen 200° C und 700°C korrigiert, wobei mittels eines im Nenner zu dieser Differenz stehender Faktors F1 der Einfluss der Signalabhängigkeit, das heißt also deren Empfindlichkeit gesteuert wird.

In Verzweigung 24 wird festgelegt, ob ein Einfluss des Sauerstoffgehalts berücksichtigt wird. Ist die im aktuellen Durchlauf n+1 - die Regelung erfolgt in zeitlich bis zum Abbruch der Regelung 20 aufeinander folgenden Durchläufen - ermittelte Stellgröße SG(pri)(n+1) größer als die Stellgröße SG(pri)(n) des vorhergehenden Durchlaufes, wird die Verzweigung 25 aufgerufen, wenn nicht, wird mit Block 26 fortgefahren.

Die Verzweigung 25 legt die Kriterien der Sauerstoffänderungen fest. Wird im aktuellen Durchlauf ein festgelegter minimaler Sauerstoffgehalt Ox(min), beispielsweise zwischen 1 % und 10% um einen vorgegebenen Wert S1, beispielsweise zwischen 1 % und 10% vom aktuellen Sauerstoffgehalt Ox überschritten und überschreitet weiterhin der aktuelle Sauerstoffgehalt Ox einen vorgegebenen Wert F2, beispielsweise 5% bis 10% wird in Block 26 übergeleitet. Wenn dies nicht der Fall ist, erfolgt keine Änderung der Stellgröße SG(pri) und es wird mit der Verzweigung 29 fortgefahren.

Der optionale Block 26 legt eine minimale Stellgröße SG(pri) fest. Wenn diese eine minimale, vorgebbare Stellgröße SG(min) unterschreitet, wird die Stellgröße SG(pri) auf diesen Wert festgelegt. Beispielsweise kann einer Drosselklappenstellung eine Öffnung von minimal 10% bis 60% vorgegeben werden.

Im nachfolgenden Block 27 findet eine Speicherung der Sollgröße SG(pri) und der Temperatur T statt. Daraufhin erfolgt die Steuerung der Luftzufuhr auf die Stellgröße SG(pri) in Block 28.

Die abschließende Verzweigung 29 entscheidet über das Ende der Regelung in Block 31, wenn die Temperatur T auf einen Wert FT, der zwischen 90°C und 150°C liegen kann, unterhalb der vorgegebenen, bevorzugten Brennraumtemperatur T(k) gefallen ist. Wird dieser Wert nicht unterschritten erfolgt eine Wiederholung der Routine unter Einhaltung einer Wartezeit t1 in Block 30, die bis zu 60 sec betragen kann, und die Regelung 20 wird fortgesetzt.

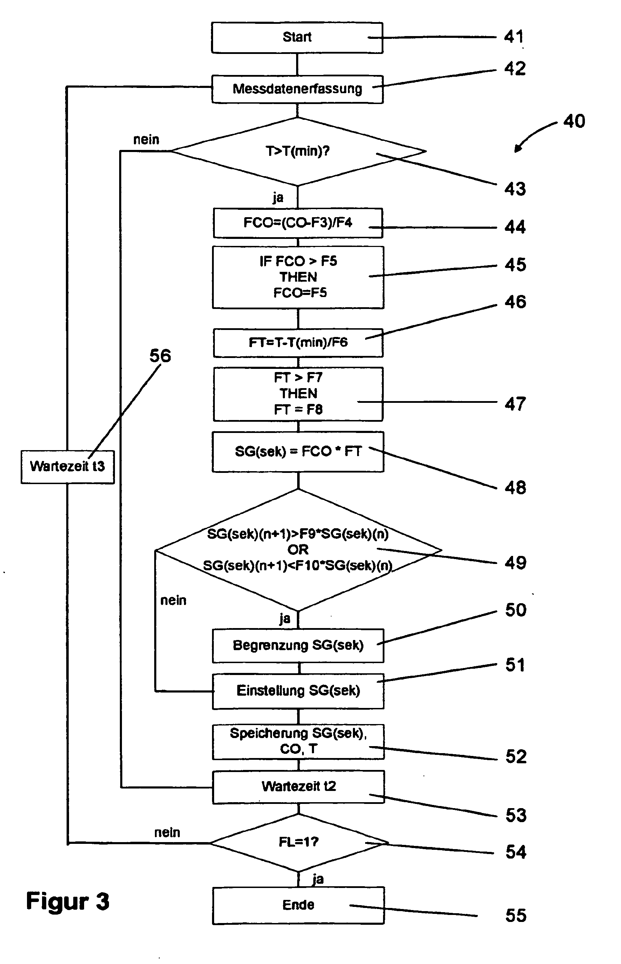

Figur 3 zeigt ein Ausgestaltungsbeispiel einer auf die Vorrichtung 1 der Figur 1 abgestimmten Regelung 40 für die sekundäre Luftzufuhr 5. Im Block 41 erfolgt der Start der Routine und entsprechend der primären Regelung 20 der Figur 1 ein Messdatenerfassungsschritt in Block 42.

In der Verzeigung 43 wird geprüft, ob die Temperatur T größer als ein vorgegebener Wert einer Minimaltemperatur T(min), dem Werte zwischen 200°C und 700°C vorgegeben werden können, ist. Bei Unterschreitung der Minimaltemperatur wird nicht weitergeregelt und in Verzeigung 53 entschieden, ob die Routine beendet oder nach einer in Block 56 festgelegten Wartezeit t3, die bis zu 60 sec betragen kann, eine neue Messung in Block 42 zugrunde gelegt und die Routine fortgeführt wird. Entspricht die Temperatur T der Minimaltemperatur T(min) oder überschreitet diese, wird die Routine mit Block 44 fortgesetzt.

In Block 44 wird der Regelungsanteil FCO der Stellgröße SG(sek) für die sekundäre Luftzufuhr ermittelt. Dabei wird vom Kohlenmonoxidgehalt CO ein Offset F3 subtrahiert und zur Einstellung einer geeigneten Regelungsgröße durch einen Faktor F4 dividiert, wobei durch die Größe des Faktors F4 der Einfluss des Regelungsanteils FCO gesteuert werden kann. In Block 45 wird der Regelungsanteil FCO begrenzt. Übersteigt der Wert einen vorgebbaren Wert F5, wird er auf diesem Wert festgehalten.

In Block 46 wird der Regelungsanteil FT der Temperatur T ermittelt. Dabei wird von der Temperatur T die oben vorgegebene Minimaltemperatur T(min) subtrahiert und zur Einstellung einer geeigneten Regelungsgröße durch einen Faktor F6 dividiert, wobei analog zu Block 44 verfahren werden kann. Wie in Block 45 für den Kohlenmonoxidgehalt wird in Block 47 die Temperatur auf einen vorgebbaren Wert F8 begrenzt, sobald die Temperatur einen vorgegebenen Wert F7 übersteigt. Die Werte F7 und F8 können identisch sein.

Die Bildung der Stellgröße SG(sek) erfolgt in Block 48 aus den für sich mittels der Faktoren F4 und F6 gewichteten Regelungsanteilen FCO und FT.

In der Verzweigung 49 wird die aktuelle Stellgröße SG(sek)(n+1) auf Abweichungen gegenüber der zuvor eingestellten Stellgröße SG(sek)(n) überprüft. Überschreitet oder unterschreitet die aktuelle Stellgröße die zuvor eingestellte Stellgröße, wird die aktuelle Stellgröße SG(sek)(n+1) in Block 50 als Stellgröße SG(sek) übernommen und zwar derart, dass nur eine vorgebbare maximale Änderung der Stellgröße ermöglicht wird, so dass eine sofortige Reaktion auf zeitlich stark schwankende Messsignale gedämpft wird, und im anschließenden Block 51 eingestellt. Ist die aktuelle Stellgröße SG(sek)(n+1) im Bereich der Ausschlusskriterien der Verzweigung 49, wird diese Stellgröße in Block 51 sofort eingestellt. Analog zu Block 27 in Figur 1 werden die ermittelten Werte gespeichert.

Nach einer in Block 53 geschalteten Wartezeit t3, die der Wartezeit t2 in Block 56 entsprechen kann, legt die Verzweigung 54 legt fest, ob die Routine bei vorliegendem Steuersignal FL in Block 55 beendet oder mit Block 42 fortgesetzt wird. Das Steuersignal FL kann von der Gesamtsteuerung der Vorrichtung 1 ausgegeben werden, wenn beispielsweise die Verbrennung abgeschlossen oder ein Wartungs- oder Fehlerfall oder dergleichen vorliegt.

Es versteht sich, dass die in den Figuren 2 und 3 angegebenen Werte, Art und Anordnung der Steuerelemente für diese Anwendung typisch sind und in weiteren Ausgestaltungen des Programms für diese Vorrichtung in anderen Abstimmungen davon abgewichen werden kann. Insbesondere sei angemerkt, dass für andere Ausgestaltungen einer Vorrichtung 1, andere Programmschritte mit sich daraus ergebenden anderen Konstanten und Faktoren notwendig werden können, die von der Erfindung umfasst sind.

**Patentansprüche**

1. Verfahren zur diskontinuierlichen Verbrennung fester organischer Brennstoffe in einem Ofen mit einer ersten Zone zur Vorverbrennung des Brennstoffs mit einer primären, regelbaren Luftzufuhr und einer zweiten, mit der ersten Zone in Verbindung stehenden Zone zur Nachverbrennung von bei der Vorverbrennung entstehenden nachverbrennbaren Reaktionsprodukten mit einer sekundären, regelbaren Luftzufuhr und einer Erfassungseinrichtung zumindest zur Erfassung der Gehalte an Sauerstoff, eines repräsentativen Gehalts an nachverbrennbaren Reaktionsprodukten sowie zur Erfassung einer Temperatur, wobei die primäre Luftzufuhr nach einer ersten vorgebbaren Brennphase mittels einer zumindest aus einem Parameter gebildeten ersten Stellgröße und die sekundäre Luftzufuhr mittels einer aus zumindest zwei Parametern gebildeten zweiten Stellgröße geregelt wird, **dadurch gekennzeichnet, dass** der zumindest eine Parameter zur Bildung der ersten Stellgröße während der ersten vorgebbaren Brennphase bis zu einer vorgebbaren Zeit, einer vorgebbaren Temperatur und/oder einem vorgebbaren Temperaturgradienten die Temperatur ist und nach der ersten Brennphase der zumindest eine Parameter zur Bildung der ersten Stellgröße der Gehalt an Sauerstoff und die Temperatur und die zumindest zwei Parameter zur Bildung der zweiten Stellgröße der repräsentative Gehalt an nachverbrennbaren Reaktionsprodukten und die Temperatur sind.

2. Verfahren nach Anspruch 1, **dadurch gekennzeichnet, dass** mehrere Parameter zumindest einer der beiden Stellgrößen in Form einer entsprechenden Anzahl von Termen zu dieser Stellgröße kombiniert werden.

3. Verfahren nach Anspruch 2, **dadurch gekennzeichnet, dass** die beiden Terme algebraisch verknüpft werden.

4. Verfahren nach einem der Ansprüche 1 bis 3, **dadurch gekennzeichnet, dass** eine Mehrzahl von Parametern einer Stellgröße gegeneinander gewichtet und auf eine maximale Luftzufuhr normiert wird.

5. Verfahren nach einem der Ansprüche 1 bis 4, **dadurch gekennzeichnet, dass** ein Temperatursignal und ein Signal zur Bestimmung des Gehalts an Sauerstoffs der Erfassungseinrichtung Eingangsgrößen einer algebraisch-metrischen Funktion darstellen, nach der der Primärluftstrom durch Positionieren einer Stellklappe über die Dauer eines Abbrennvorgangs definiert wird.

6. Verfahren nach einem der Ansprüche 1 bis 5, **dadurch gekennzeichnet, dass** ein Temperatursignal und ein Signal zur Bestimmung des repräsentativen Gehaltes der nachverbrennbaren Reaktionsprodukte der Erfassungseinrichtung Eingangsgrößen einer algebraisch-metrischen Funktion darstellen, nach der der Sekundärluftstrom durch Positionieren einer Stellklappe über die Dauer eines Abbrennvorgangs definiert wird.

7. Verfahren nach einem der Ansprüche 1 bis 6, **dadurch gekennzeichnet, dass** die Regelung zumindest einer der beiden Stellgrößen getaktet nach einer vorgebbaren Regelungsrate erfolgt.

8. Verfahren nach Anspruch 7, **dadurch gekennzeichnet, dass** die Regelungsrate kleinerals eine Messrate zur Erfassung der Parameter der Erfassungseinrichtung ist.

9. Verfahren nach einem der Ansprüche 7 oder 8, **dadurch gekennzeichnet, dass** mittels der Messraten zwischen Regelraten eine Dämpfung der Regelung erfolgt..

10. Verfahren nach einem der Ansprüche 1 bis 9, **dadurch gekennzeichnet, dass** die Temperatur die Verbrennungstemperatur ist.

11. Verfahren nach einem der Ansprüche 1 bis 10, **dadurch gekennzeichnet, dass** der Gehalt an nachverbrennbaren Reaktionsprodukten mittels eines Mischpotentialsensors bestimmt wird.

12. Verfahren nach einem der Ansprüche 1 bis 11, **dadurch gekennzeichnet, dass** der Gehalt an Sauerstoff mittels einer dynamischen Sauerstoffmesszelle bestimmt wird.

13. Verfahren nach einem der Ansprüche 1 bis 12, **dadurch gekennzeichnet, dass** Sensoren mit Abhängigkeiten gegenüber Messgrößen anderer vorhandener Sensoren mittels derer Signale kompensiert werden.

14. Vorrichtung zur Verbrennung fester organischer Brennstoffe mit einer ersten Zone zur Vorverbrennung des Brennstoffs mit einer primären, regelbaren Luftzufuhr und einer zweiten, mit der ersten Zone in Verbindung stehenden Zone zur Nachverbrennung von bei der Vorverbrennung entstehenden nachverbrennbaren Reaktionsprodukten mit einer sekundären, regelbaren Luftzufuhr und einer Erfassungseinrichtung zumindest zur Erfassung der Gehalte an Sauerstoff, eines repräsentativen Gehalts an nachverbrennbaren Reaktionsprodukten sowie zur Erfassung der Temperatur zur Durchführung des Verfahrens gemäß den Ansprüchen 1 bis 13.

**Claims**

1. Method for discontinuously burning solid organic fuels in a furnace with a first zone for pre-combustion of the fuel with a primary adjustable air supply and a second zone which is connected to the first zone and has the purpose of post-combustion of reaction products which are produced during the pre-combustion and are post-combustible, with a secondary adjustable air supply and a sensing device at least for sensing the content of oxygen, a representative content of post-combustible reaction products and for sensing a temperature, wherein after a first predefinable combustion phase the primary air supply is adjusted by means of a first actuation variable formed from at least one parameter and the secondary air supply is adjusted by means of a second actuation variable which is formed from at least two parameters, **characterized in that** the at least one parameter for forming the first actuation variable during the first predefinable combustion phase up to a predefinable time, a predefinable temperature and/or a predefinable temperature gradient is the temperature, and after the first combustion phase the at least one parameter for forming the first actuation variable is the content of oxygen and the temperature, and the at least two parameters for forming the second actuation variable are the representative content of post-combustible reaction products and the temperature.

2. Method according to Claim 1, **characterized in that** a plurality of parameters of at least one of the two actuation variables are combined in the form of a corresponding number of terms to form this actuation variable.

3. Method according to Claim 2, **characterized in that** the two terms are combined algebraically.

4. Method according to one of Claims 1 to 3, **characterized in that** a multiplicity of parameters of one actuation variable are weighted against one another and standardized to a maximum air supply.

5. Method according to one of Claims 1 to 4, **characterized in that** a temperature signal and a signal for determining the content of oxygen of the sensing device constitute input variables of an algebraic-metric function according to which the primary airflow is defined by positioning an actuation flap over the duration of a burning-off process.

6. Method according to one of Claims 1 to 5, **characterized in that** a temperature signal and a signal for determining the representative content of the post-combustible reaction products of the sensing device constitute input variables of an algebraic-metric function according to which the secondary airflow is defined by positioning an actuation flap over the duration of a burning-off process.

7. Method according to one of Claims 1 to 6, **characterized in that** the adjustment of at least one of the two actuation variables takes place in a clocked fashion according to a predefinable adjustment rate.

8. Method according to Claim 7, **characterized in that** the adjustment rate is lower than a measurement rate for sensing the parameters of the sensing device.

9. Method according to one of Claims 7 and 8, **characterized in that** damping of the adjustment takes place by means of the measurement rates between adjustment rates.

10. Method according to one of Claims 1 to 9, **characterized in that** the temperature is the combustion temperature.

11. Method according to one of Claims 1 to 10, **characterized in that** the content of post-combustible reaction products is determined by means of a mixed potential sensor.

12. Method according to one of Claims 1 to 11, **characterized in that** the content of oxygen is determined by means of a dynamic oxygen measuring cell.

13. Method according to one of Claims 1 to 12, **characterized in that** sensors with dependencies on measurement variables of other sensors which are present are compensated by means of the signals thereof.

14. Device for burning solid organic fuels with a first zone for pre-combustion of the fuel with a primary adjustable air supply and a second zone which is connected to the first zone and has the purpose of post-combustion of reaction products which are produced during the pre-combustion and are post-combustible, with a secondary adjustable air supply and a sensing device at least for sensing the content of oxygen, a representative content of post-combustible reaction products and for sensing the temperature for carrying out the method according to Claims 1 to 13.

**Revendications**

1. Procédé pour la combustion discontinue de combustible organique solide dans un four avec une première zone destinée à la précombustion du combustible avec une arrivée d'air primaire réglable et une deuxième zone se trouvant en communication avec la première zone, destinée à la postcombustion de produits de réaction encore combustibles provenant de la précombustion avec une arrivée d'air secondaire réglable, et avec un dispositif de détection pour la détection d'au moins les teneurs en oxygène, d'une teneur représentative en produits de réaction encore combustibles ainsi que pour la détection d'une température, dans lequel on régule l'arrivée d'air primaire après une première phase de combustion prédéterminable au moyen une première grandeur de réglage formée au moins par un paramètre et l'arrivée d'air secondaire au moyen d'une deuxième grandeur de réglage formée par au moins deux paramètres, **caractérisé en ce que** ledit au moins un paramètre pour la formation de la première grandeur de réglage pendant la première phase de combustion prédéterminable jusqu'à un instant prédéterminable, une température prédéterminable et/ou un gradient de température prédéterminable est la température et, après la première phase de combustion, ledit au moins un paramètre pour la formation de la première grandeur de réglage est la teneur en oxygène et la température et les au moins deux paramètres pour la formation de la deuxième grandeur de réglage sont la teneur représentative en produits de réaction encore combustibles et la température.

2. Procédé selon la revendication 1, **caractérisé en ce que** l'on combine plusieurs paramètres d'au moins une des deux grandeurs de réglage sous la forme d'un nombre correspondant de termes pour former cette grandeur de réglage.

3. Procédé selon la revendication 2, **caractérisé en ce qu'**on lie algébriquement les deux termes.

4. Procédé selon l'une quelconque des revendications 1 à 3, **caractérisé en ce que** l'on pondère l'un par rapport à l'autre une pluralité de paramètres d'une grandeur de réglage et on les normalise à une arrivée d'air maximale.

5. Procédé selon l'une quelconque des revendications 1 à 4, **caractérisé en ce qu'**un signal de température et un signal pour la détermination de la teneur en oxygène provenant du dispositif de détection représentent des grandeurs d'entrée d'une fonction algébrique métrique, selon laquelle le flux d'air primaire est défini par le positionnement d'un clapet de réglage sur la durée d'une opération de combustion.

6. Procédé selon l'une quelconque des revendications 1 à 5, **caractérisé en ce qu'**un signal de température et un signal pour la détermination de la teneur représentative en produits de réaction encore combustibles provenant du dispositif de détection représentent des grandeurs d'entrée d'une fonction algébrique métrique, selon laquelle le flux d'air secondaire est défini par le positionnement d'un clapet de réglage sur la durée d'une opération de combustion.

7. Procédé selon l'une quelconque des revendications 1 à 6, **caractérisé en ce que** la régulation d'au moins une des deux grandeurs de réglage est effectuée en cadence suivant une vitesse de régulation prédéterminable.

8. Procédé selon la revendication 7, **caractérisé en ce que** la vitesse de régulation est inférieure à une vitesse de mesure pour la détection des paramètres du dispositif de détection.

9. Procédé selon l'une des revendications 7 ou 8, **caractérisé en ce que** l'on effectue un amortissement de la régulation au moyen des vitesses de mesure entre des vitesses de régulation.

10. Procédé selon l'une quelconque des revendications 1 à 9, **caractérisé en ce que** la température est la température de combustion.

11. Procédé selon l'une quelconque des revendications 1 à 10, **caractérisé en ce que** l'on détermine la teneur en produits de réaction encore combustibles au moyen d'un capteur de potentiel de mélange.

12. Procédé selon l'une quelconque des revendications 1 à 11, **caractérisé en ce que** l'on détermine la teneur en oxygène au moyen d'une cellule de mesure d'oxygène dynamique.

13. Procédé selon l'une quelconque des revendications 1 à 12, **caractérisé en ce que** l'on compense au moyen de leurs signaux des capteurs présentant des dépendances vis-à-vis de grandeurs de mesure d'autres capteurs présents.

14. Dispositif pour la combustion de combustibles organiques solides avec une première zone destinée à la précombustion du combustible avec une arrivée d'air primaire réglable et une deuxième zone, se trouvant en communication avec la première zone, destinée à la postcombustion de produits de réaction encore combustibles provenant de la précombustion, avec une arrivée d'air secondaire réglable, et un dispositif de détection destiné au moins à la détection des teneurs en oxygène, d'une teneur représentative en produits de réaction encore combustibles ainsi qu'à la détection de la température en vue de la mise en oeuvre du procédé selon l'une quelconque des revendications 1 à 13.

Figur 1

**Figur 2**

**Figur 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 412903 B
- DE 4137778 A1